# EUROPÄISCHE PATENTANMELDUNG

(11) **EP 1 100 070 A2**
(43) Veröffentlichungstag der Anmeldung: **16.05.2001**
(21) Anmeldenummer: 00124144.7
(22) Anmeldetag: 07.11.2000
(51) Int. Cl.: G10K 11/16

(54) **Verfahren zur Beeinflussung von in Schwingungsform vorliegende Informationssignale beeinträchtig ende Störfaktoren, sowie einer Dämpfungseinrichtung zur Durchführung des Verfahrens oder einem Audiogerät zur Durchführung des Verfahrens**

(30) Priorität: 11.11.1999 DE 19954502
(71) Anmelder: Rogalski, Werner, Dr., 64665 Alsbach-Hähnlein (DE); Rogalski, Astrid, 64665 Alsbach-Hähnlein (DE)
(72) Erfinder: Rogalski, Werner, Dr., 64665 Alsbach-Hähnlein (DE); Rogalski, Astrid, 64665 Alsbach-Hähnlein (DE)
(74) Vertreter: Dallhammer, Herbert, Dipl.-Ing.

(57) **Zusammenfassung**

Bei einem Verfahren zur Beeinflussung von in Schwingungsform vorliegende Informationssignale beeinträchtigende Störfaktoren sowie Dämpfung, Ableitung und Umwandlung von mechanischen Resonanzen und störenden Schwingungsenergien bei Audio- und Videogeräten, Lautsprechern oder dergleichen wird zur Lösung der Aufgabe bei Audio- und Videogeräten, in Lautsprechern und dergleichen bei einer Speicherung oder einer Wiedergabe Resonanzen und Vibrationen, die mit ihren Frequenzen und Amplituden Überlagerungen von Schwingungen in den Leitern und / oder Bauteilen hervorrufen, wodurch es zu Interferenzen mit den Informationssignalen und den Störschwingungen kommt, was zu einer Änderung der Schwingungen der Ursprungssignale führt, zu beeinflussen und auch induktive Spannungen zu beeinflussen, welche die Spannung der Ursprungssignale stören, und welche aus Strom durchflossenen Leitern und / oder Bauteilen die von magnetischen Feldern umgeben sind, entstehen, vorgeschlagen, daß entstehende Resonanzen und / oder störende Schwingungsenergien einer Mehrfachdämpfung unterworfen werden, Schwingungsenergien in Wärme umgewandelt werden, und daß die bei Mehrfachdämpfung und / oder Wärmeumwandlung entstehenden Sekundärschwingungen durch die Mehrfachdämpfung ausgelöscht werden. Zur Durchführung des Verfahrens dient eine Dämpfungseinrichtung oder ein Audiogerät.

## Beschreibung

Die Erfindung betrifft ein Verfahren zur Beeinflussung von in Schwingungsform vorliegende Informationssignale beeinträchtigende Störfaktoren, sowie Dämpfung, Ableitung und Umwandlung von mechanischen Resonanzen und störenden Schwingungsenergien bei Audio- und Videogeräten, Lautsprechern oder dergleichen, sowie eine Dämpfungseinrichtung bestehend aus einem Gehäuse mit einem Unterteil und einem Oberteil, wobei Ober- und Unterteil miteinander verbunden sind, und mit einer zwischen Ober- und Unterteil angeordneten, aus Schichten bestehenden Dämpfung zur Durchführung des Verfahrens oder einem Audiogerät zur Durchführung des Verfahrens.

Durch die deutsche Offenlegungsschrift 31 39 021 A1 ist ein Tonwellenabsorbergestell für Lautsprecherboxen, Fernsehapparate etc. bekannt geworden, bei welchem Störsignale durch die Anordnung von Halbkugeln als Auflagefläche mit darunter befindlicher Schaumstoffschicht ausgefiltert werden sollen und sichergestellt werden soll, daß das Weiterleiten der Gehäuseresonanzen (Fremdresonanzen) verhindert wird und eine Klangverbesserung (akustische Verbesserung) erzielt wird. Hierzu werden als dämmende Materialien porosierte, geschäumte und gefilzte Massen, sowie gefasertes und gewachsenes Material genannt. Auch wird darauf hingewiesen, daß die Höhe und Breite und Tiefe des Untersatzes beliebig frei gestaltbar sind, und daß die "oberen" und "unteren" Sockel nicht unbedingt aus metallischen Materialien bestehen müssen, sondern auch aus dämmenden, z.B. gesteinsähnlichen Materialien oder aus beliebigen Kunststoffen in Ein-, Zwei- oder Mehrkomponenten-Verbindungen hergestellt werden können. Eine besonders bevorzugte Einrichtung besteht aus einem unteren Sockel aus Aluminium, einer darauf folgenden Schicht Moosgummi, einer Glasplatte, einer darauf folgenden Moosgummischicht und letztlich einem weiteren Sockel aus Aluminium. Hierbei wird in den rechteckigen Block eine Vertiefung gefräst, in der dann eine Hartgummihalbkugel eingesetzt ist.

Durch die Offenlegungsschrift DE 34 10 869 A1 ist ein Lautsprechergehäuse bekannt geworden, bei welchem zur Vermeidung von Schwingungen vorgeschlagen wird, daß die Öffnung auf der Außenseite der Schallwand von einem gegenüber deren Oberfläche erhöhtem Sockel zur Befestigung des Wandlers umgeben ist, und daß die äußere Oberfläche der Schallwand mit einer Dämm- und einer Dämpfschicht beschichtet ist, deren Gesamtdicke etwas größer als die Höhe des Sockels über der äußeren Oberfläche der Schallwand ist.

Durch das deutsche Gebrauchsmuster 295 00821.0 ist eine Vorrichtung zur Entkopplung und Dämpfung von Körperschallschwingungen von Lautsprecherboxen bekannt geworden, bei welcher durch Einsatz einer Kugel die von einem Gehäuse ausgehenden Schwingungen auf eine Halteplatte übertragen werden, die selbst vorzugsweise auf drei Kugeln aufliegt und die in Bohrlöchern angeordnet sind. Hierzu wird als Material für die Kugel vorgeschlagen Holz, Glas, Kunstglas und Gummi, für die Halteplatte Stahl, Holz und Kunststoffe.

Durch die Zeitschrift STEREO, Heft 8, August 1996, Seite 140 im Artikel "Tips aus der Küche des Alchimisten" sind spezielle Unterlagen für Lautsprecher bekannt geworden, "...die aus miteinander verleimten und mit Sand und Blei aufgefüllten Brettern bestehen..." wobei die als Basen bezeichneten Einrichtungen die "...Durchsichtigkeit und Strukturierung..." einer in derselben Zeitschrift von Seite 136 - 140 offenbarten Einrichtung (Titel: "Das High End- Konzentrat") noch spürbar verbesserten. Weiterhin wird dort offenbart, daß durch Beschweren von Boxengehäusen mit verschiedenen Gewichten ein weiteres Ruhigstellen ermöglicht wird, wodurch noch mehr Stabilität und Definition in das Klangbild zu bringen ist. Außerdem wird auch dort offenbart, Seitenflanken von Gehäusen mit Marmor auszugestalten.

Aus dem gesamten Stand der Technik geht somit hervor, daß bei der Übertragung von Informationssignalen in Audio- und Videogeräten jeglicher Art bisher noch keine zufriedenstellende Dämpfungsverfahren und entsprechende Einrichtungen bekannt geworden sind, mit welchen die Informationssignale beeinflussende Störfaktoren abgeleitet und ausgefiltert werden können.

Ausgehend hiervon liegt der vorliegenden Erfindung die Aufgabe zugrunde, bei Audio- und Videogeräten, in Lautsprechern und dergleichen, bei einer Speicherung oder einer Wiedergabe z.B. durch eine CD oder Schallplatte Resonanzen und Vibrationen, die mit ihren Frequenzen und Amplituden Überlagerungen von Schwingungen in den Leitern und / oder Bauteilen hervorrufen, wodurch es zu Interferenzen mit den Informationssignalen und den Störschwingungen kommt, was zu einer Änderung der Schwingungen der Ursprungssignale führt, zu beeinflussen und auch induktive Spannungen zu beeinflussen, welche die Spannung der Ursprungssignale stören, und welche aus Strom durchflossenen Leitern und / oder Bauteilen, die von magnetischen Feldern umgeben sind, entstehen.

Zur Lösung dieser Aufgabe wird ausgehend vom bekannten Stand der Technik gemäß Anspruch 1 ein Verfahren unter Schutz gestellt, welches sich dadurch auszeichnet, daß entstehende Resonanzen und / oder störende Schwingungsenergien einer Mehrfachdämpfung unterworfen werden, die Schwingungsenergie in Wärme umgewandelt, und die bei Mehrfachdämpfung und / oder Wärmeumwandlung entstehenden Sekundärschwingungen durch die Mehrfachdämpfung ausgelöscht werden. Durch diese erfindungsgemäße Verfahrensweise einer Zweiwegfilterung, die sowohl die aus dem Audio- bzw. Videobereich kommenden Störungen vernichtet, als auch gleichzeitig die beispielsweise durch Trittschall oder die durch die Stromversorgung entstehenden Störungen irreversibel beseitigt, wird das ursprüngliche Informationssignal oder die Kombination von Informationssignalen, welche bei Vortrag eines Musikstückes entstehen, unverfälscht in der vom Mikrofon aufgenommenen Qualität wiedergegeben oder einem Speicher, beispielsweise einer CD oder Schallplatte zugeführt. Auch erfolgt hierdurch die Wiedergabe beispielsweise einer so konservierten Musikdarbietung ohne vom Wiedergabegerät ausgehende Störschwingungen unverfälscht, praktisch naturgetreu.

Ausgehend von einer Dämpfungseinrichtung mit einem rechteckigen Gehäuse, mit einem Oberteil und einem Unterteil, wobei Ober- und Unterteil miteinander verbunden sind, und zwischen Ober- und Unterteil angeordneten Schichten zur Absorption von Resonanzen und zur Absorption störender Schwingungsenergien bei Audio- und Videogeräten, Lautsprechern oder dergleichen, wird zur Durchführung des Verfahrens nach Anspruch 1 gemäß Anspruch 2 erfindungsgemäß vorgeschlagen, daß das Oberteil auf dem Unterteil dergestalt aufliegt, daß mindestens ein Teil eines Dämpfers bestehend aus übereinander liegenden Schichten aus Dämmmaterial in von einer Auflage begrenzten Vertiefung im Unterteil angeordnet ist, daß dieser Teil einer, durch sein Eigengewicht hervorgerufenen Flächenpressung, ausgesetzt ist, daß das Oberteil sich über mindestens eine weitere, aus Dämmmaterial bestehende Schicht des Dämpfers auf der Auflage im Unterteil und gleichzeitig über die weitere Schicht auf der obersten Schicht aus Dämmmaterial des in der Vertiefung angeordneten Teils des Dämpfers abstützt und daß Auflage, und oberste Schicht zueinander ausgerichtet sind und eine Ebene bilden. Durch diese erfindungsgemäße Dämpfungseinrichtung, bei welcher das Unterteil aus Holz und das Oberteil aus einer Aluminiumplatte besteht, wird der im Unterteil befindliche Dämpfer lediglich durch sein Eigengewicht zusammengepreßt, durch das erfindungsgemäße Vorsehen einer weiteren Schicht aus Dämmmaterial zwischen Aluminiumplatte als Oberteil, und Holzteil als Unterteil wird sichergestellt, daß durch die Filterung entstehende Sekundärschwingungen über die durch in einfachster Form durch Eigengewicht entstehende Vorpressung an die Innenwand des Unterteils angepressten Dämpfungsschichten nicht wieder über das Holzgehäuse in das Oberteil aus Aluminium eindringen können, und zwar durch erfindungsgemäßes Vorsehen der weiteren Schicht aus Dämmmaterial direkt unterhalb der Aluminiumplatte. Insbesondere durch eine erfindungsgemäß zusätzliche vorsätzlich aufgebrachte Flächenpressung in vorgebbarer Größe auf den im Unterteil befindlichen Dämpferteil, läßt sich die erfindungsgemäße Dämpfungseinrichtung weiter optimieren. Als aktives Einleitungsglied für die vorsätzliche Flächenpressung dient erfindungsgemäß die oberste Schicht aus Dämmmaterial des in der Vertiefung angeordneten Teils des Dämpfers, die in Ausgestaltung der Erfindung mit senkrechten Seitenwänden der Vertiefung dergestalt punktuell verklebt wird, daß an diesen Stellen keine Sekundärschwingungen in die Wand des Unterteils übertreten können und daß die Oberseite der obersten Schicht aus Dämmmaterial mit der Auflage eine Ebene bildet. Um eine vorsätzliche Flächenpressung in einfachster Form aufzubringen, werden bei denselben Vertiefungsabmessungen Schichten von Dämmmaterial mit größerer Dicke verwendet, die durch das aktive Einleitungsglied soweit zusammengepreßt werden, bis dessen Oberseite eine Ebene mit der Auflage bildet; dann erfolgt die punktuelle Verklebung des aktiven Einleitungsglieds mit seinem Rand mit den senkrechten Seitenwänden, bevorzugt in den Ecken bei einer rechteckigen Vertiefung.

In Ausgestaltung des Anspruchs 2 wird gemäß Anspruch 3 unter Schutz gestellt, daß die Unterseite der weiteren Schicht aus Dämmmaterial mit der Auflage im Unterteil verklebt ist und mit ihrer Oberseite lediglich mit dem Teil der Unterseite des Oberteils verklebt ist, der die Vertiefung des Unterteils überragt, und daß ein Spalt zwischen Rand der Auflage im Unterteil und dem Außenrand des Oberteils vorgesehen ist. Durch die erfindungsgemäße Teilverklebung der Unterseite des Oberteils mit der weiteren Schicht aus Dämmmaterial des Dämpfers, welche ihrerseits mit der Auflage im Unterteil verklebt ist, und durch den erfindungsgemäßen Spalt zwischen dem Rand der Auflage im Unterteil und dem Aussenrand des Oberteils, wird eine zusätzliche schwingungsgedämpfte Lagerung erreicht, die verhindert, daß entstehende Sekundärschwingungen von dem Oberteil in das Unterteil bzw. vice versa übertragen werden.

Gemäß Anspruch 4 wird ausgehend vom bekannten Stand der Technik eine andere Dämpfungseinrichtung zur Durchführung des Verfahrens unter Schutz gestellt, die sich dadurch auszeichnet, daß in einem aus einem Aluminiumhohlzylinder vorgegebenen Innendurchmessers, vorgegebener Wanddicke und Höhe, und einem mit diesem Hohlzylinder verbundenen Aluminiumdeckel, welcher insbesondere mit einem Bund auf dem Rand des Hohlzylinders aufsitzt und verklebt ist, als Aufstandsfläche, bestehendem Unterteil, Schichten aus Dämmmaterial als Dämpfer angeordnet sind, daß ein das Oberteil bildender Deckel aus Aluminium vorgegebener Dicke, welcher ebenfalls mit einem Bund auf dem Rand des Hohlzylinders aufsitzt, an seiner mit den Schichten aus Dämmmaterial zusammenwirkenden Oberfläche einen Absatz variabler Höhe und einen den lichten Durchmesser des Hohlzylinders entsprechenden Durchmesser besitzt, welcher sich in den Hohlzylinder hinein erstreckt, und daß der Deckel an seinem Bund mit dem Rand des Hohlzylinders unter Ausübung eines Flächendrucks auf die Schichten aus Dämmmaterial, hervorgerufen durch sein Eigengewicht, verklebt ist. Diese konstruktive andere Ausgestaltung einer erfindungsgemäßen Dämpfungseinrichtung ermöglicht, durch die durch den Deckel auf den Dämpfer ausgeübte Flächenpressung, ebenfalls eine doppelt wirkende Filterung von Störschwingungen. Eine Erhöhung der Flächenpressung ist wie erfindungsgemäß zu Anspruch 2 bereits offenbart auch hier erfindungsgemäß möglich.

Anstelle der als erfindungsgemäß offenbarten variablen Höhe des Absatzes des Deckels zur Vorgabe eines variablen Flächendrucks auf den Dämpfer wird als eine andere erfindungsgemäße Lösung vorgeschlagen, daß bei Einsatz eines Deckels bestimmter Dicke mit Bund die Höhe des aus Schichten aus Dämmmaterial bestehenden Dämpfers für eine Flächenpressung variabel ausgestaltet wird, sei es erfindungsgemäß durch Ändern der Dicke der einzelnen Schichten, durch Ändern der Anzahl der Schichten oder durch gleichzeitiges Anwenden beider Maßnahmen.

Gemäß Anspruch 5 zeichnet sich ein Audiogerät zur Durchführung des Verfahrens nach Anspruch 1 dadurch aus, daß der Audiogeräteboden mit seiner Aufstandsfläche direkt auf mindestens einer Schicht aus sämisch gegerbtem Elchleder, als weiterer Schicht eines Dämpfers aufliegt, daß die Lederschicht in horizontaler Richtung die Aufstandsfläche des Audiogerätebodens überragt, daß die Lederschicht auf einer mindestens einseitig galvanisch mit Zink überzogenen ferromagnetischen Schicht, als oberster Schicht eines in einer Vertiefung eines Unterteils angeordneten Teils des Dämpfers und auf einer in derselben Ebene verlaufenden Auflage im Unterteil aufliegt, daß die galvanisch mit Zink überzogene ferromagnetische Schicht mit ihrer Oberseite mit der Auflage im Unterteil ausgerichtet ist, daß in der Vertiefung ein durch die ferromagnetische Schicht unter Flächenpressung stehender Teil des Dämpfers sich bis zum Innenboden der Aufstandsfläche des Unterteils erstreckt, daß der Rand des Unterteils die Lederschicht in vertikaler Richtung überragt, daß zwischen der Oberseite des Unterteils und der Unterseite der großen Aufstandsfläche des Audiogerätebodens ein umlaufender Spalt vorgesehen ist, und daß zwischen der seitlichen Audiogerätebodenbegrenzung und einem Rand der Auflage im Unterteil ebenfalls ein umlaufender Spalt vorhanden ist.

Hierdurch wird erstmals ein Audiogerät mit integrierter Dämpfungseinrichtung zur Durchführung des erfinderischen Verfahrens offenbart.

Es fällt demgemäß unter dem Schutzumfang der vorliegenden Erfindung die bei Verstärkern vorgesehenen Bodenplatten oder die Verankerungen eines Lautsprechers oder den Boden eines Videogerätes direkt über eine wie im Anspruch 5 näher definierte erfindungsgemäße Lederschicht mit einem als Unterteil ausgebildeten Gehäuse zu verbinden, in welchem erfindungsgemäß ein Dämpfer vorgesehen ist, der allein durch das Eigengewicht seiner Schichten aus Dämmmaterial einer Flächenpressung ausgesetzt ist. Auch eine Erhöhung der Flächenpressung unter dem der Dämpfer steht läßt sich wie zu Anspruch 2 ausführlich ausgeführt durchführen. Ebenso gilt es auch hier als eine erfindungsgemäße Ausgestaltung wenn die erfindungsgemäß galvanisch mit Zink überzogene ferromagnetische Schicht punktuell mit den senkrechten Wandungen der Vertiefung im Unterteil verbunden ist.

Durch die Erfindung wird erstmals direkt, ohne den Einsatz zusätzlicher Basen, praktisch eine Komplettdämpfung des einzelnen Geräts erreicht, da durch die erfindungsgemäßen Spalte, und die erfindungsgemäße Anordnung einer weiteren Schicht, insbesondere aus sämisch gegerbtem Elchleder, des Dämpfers, zwischen Gerätebodenteil einerseits und dem Teil des Dämpfers andererseits die Gewähr dafür gegeben ist, daß Sekundärschwingungen nicht zurück in die praktisch komplett bedämpften Bauteile gelangen.

In Ausgestaltung des Anspruchs 5 wird gemäß Anspruch 6 unter Schutz gestellt, daß die Unterseite der Schicht aus sämisch gegerbten Elchleder mit der Auflage des Unterteils verklebt ist und mit ihrer Oberseite lediglich mit dem Teil der Unterseite des Gerätebodens verklebt ist, der die Vertiefung des Unterteils überragt, und daß ein Spalt zwischen Rand des Unterteils und dem Geräteboden vorgesehen ist. Durch das erfindungsgemäße gleichzeitige Verkleben der Schicht nur in dem Bereich der Auflage, der vom Geräteboden überdeckt wird, mit dem Geräteboden, wird erstmals trotz dieser Verbindung des Gerätebodens über die weitere Schicht mit dem Unterteil eine eindeutige Sperre insbesondere für Sekundärschwingungen erreicht, durch welche auch beispielsweise auftretende Scherkräfte, hervorgerufen durch Horizontalschwingungen im Gerät und / oder im Unterteil, in der weiteren Schicht ausgelöscht werden, ehe deren Wirkung in das Unterteil oder das Gerät eindringen kann.

In Ausgestaltung des Erfindungsgegenstandes nach den Ansprüchen 2,3 oder 4 oder 5,6 wird erfindungsgemäß nach Anspruch 7 vorgeschlagen, daß die Stärke der Flächenpressung einstellbar ist. Hierdurch lassen sich die erfindungsgemäßen Dämpfungseinrichtungen oder das erfindungsgemäße Audiogerät ohne zusätzlich erforderlich werdende Dämpfungsmaßnahmen bereits bei der Herstellung auf ihre spätere Verwendung im Audio-, Video-, Lautsprecher-, Verstärker- oder dergleichen Bereich einstellen.

In noch weiterer Ausgestaltung nach den Ansprüchen 2,3 oder 4 oder 5,6 und 7 wird gemäß Anspruch 8 unter Schutz gestellt, daß kompressible und nichtkompressible Schichten aus Dämmmaterial im Dämpfer vorgesehen sind, daß die Dicke der Schichten aus kompresssiblem Dämmmaterial ohne Flächenpressung einen Dickebereich von 0,5 mm - 10,0 mm je einschließlich umfassen, und daß die Dicke der Schichten aus praktisch nichtkompressiblem Dämmmaterial einen Dickebereich von 0,5 mm - 12,0 mm je einschließlich umfassen. Auch diese Dickebereiche dienen erfindungsgemäß bereits beim Zusammenbau der Dämpfer zur genaueren Anpassung an das spätere Aufgabengebiet.

In Ausgestaltung des Erfindungsgegenstandes nach Anspruch 8 wird im Anspruch 9 erfindungsgemäß vorgeschlagen, daß kompressible Kunststoffe, vorzugsweise Elastomere und Leder kompressibles Dämmmaterial und mindestens eine Bleiplatte, vorzugsweise mindestens eine einseitig galvanisch mit Zink überzogene Bleiplatte und mindestens eine ferromagnetische Platte, vorzugsweise eine mindestens einseitig galvanisch mit Zink überzogene ferromagnetische Platte nichtkompressibles Dämmmaterial sind, und daß mindestens eine Schicht kompressibler Dämmmaterialien mit mindestens einer Schicht nichtkompressibler Dämmmaterialien abwechselt, und daß im Dämpfer mindestens eine mindestens einseitig galvanisch mit Zink überzogene Bleiplusplatte und mindestens eine mindestens einseitig mit Zink überzogene ferromagnetische Platte vorgesehen sind. Durch diese erfindungsgemäße Ausgestaltung des wechselweisen Einbaus von kompressiblem und nichtkompressiblem Dämmmaterial wird überraschend erreicht, daß vom nichtkompressiblen Dämmmaterial ausgehende Sekundärschwingungen durch den unter Flächenpressung stehenden Dämpfer ausgeschaltet werden, und daß zufolge erfindungsgemäßem Einsatzes von ferromagnetischen Werkstoffen ein sogenannter Eisenweg zur Bündelung eines magnetischen Feldes eingesetzt wird. Dies bedingt zwangsläufig eine Verdünnung der Feldlinien um elektrische Leiter und / oder Bauteile, auch im Wiedergabegerät, wodurch zwangsläufig eine auftretende induktive Spannung geschwächt und bei längerer Aufrechterhaltung des Eisenweges praktisch gegen null geht.

In noch weiterer Ausgestaltung des Erfindungsgegenstandes wird in Ausgestaltung der Ansprüche 2,3,7,8,9 oder 4,8,9 oder 5,6,7,8,9 gemäß Anspruch 10 unter Schutz gestellt, daß als oberste Schicht im Dämpfer mindestens eine Lederschicht, insbesondere sämisch gegerbtes Elchleder, direkt unterhalb des Oberteils oder des Gerätebodens und dieses/diesen seitlich überragend vorgesehen ist, daß die im Dämpfer enthaltene, mindestens eine beidseitig galvanisch mit Zink überzogene ferromagnetische Platte in Richtung auf das Oberteil oder auf das Gerätebodenteil mit mindestens einer Lederschicht bedeckt ist, daß mindestens eine im Dämpfer vorgesehene, mindestens einseitig galvanisch mit Zink überzogene Bleiplatte in Richtung auf das Bodenteil von mindestens einer diese seitlich überragenden Lederschicht bedeckt ist. Durch die erfindungsgemäße Anordnung von Lederschichten wird vermieden, daß bei einer Flächenpresssung durch beispielsweise Trittschall ausgelöste Sekundärschwingungen über das umhüllende Gehäuse in die Geräte gelangen und damit Störungen in den Informationssignalen verursachen können.

In noch weiterer Ausgestaltung des Erfindungsgegenstandes nach den Ansprüchen 9 oder 10 wird gemäß Anspruch 11 unter Schutz gestellt, daß eine Schicht aus sämisch gegerbtem Elchleder ein kompressibles Dämmmaterial darstellt. Durch die erfindungsgemäße Flächenpressung, die durch einen Druck zwischen 2 und 6 kg einen entsprechenden Flächendruck auf etwa 10 qcm als Flächeneinheit bewirken, wird darüber hinaus erfindungsgemäß die Berührungsfläche zwischen den Metallschichten und den die Dämpferwand bildenden Materialien, insbesondere Aluminium und Holz, beachtlich reduziert.

In noch weiterer Ausgestaltung des Erfindungsgegenstandes wird gemäß Anspruch 12 unter Schutz gestellt, daß die auf der inneren Bodenseite des Unterteils aufliegende erste Schicht kompressiblem Materials die höchste Shorehärte der im Dämpfer verwendeten Elastomere besitzt. Hierdurch werden von der Unterseite der erfindungsgemäßen Dämpfungseinrichtung oder des erfindungsgemäßen Gerätebodens bereits die nichtkompressiblen Außenwände, bei denen es sich auch um Hartkunststoffe handeln kann, beachtlich bedämpft.

In noch weiterer Ausgestaltung des Erfindungsgegenstandes wird gemäß Anspruch 13 unter Schutz gestellt, daß auf der Oberseite des Oberteils Stützen zur Auflage eines Gerätes freibeweglich angeordnet sind. Als freibewegliche Stützen eignen sich insbesondere zylindrische Aluminiumstützen. Jedoch sind auch Stützen aus anderen, elektrische Ströme nur schwer leitenden Metallen einsetzbar.

In Anspruch 14 wird die Verwendung einer Dämpfungseinrichtung gemäß der Ansprüche 2,3,7 bis 13 mit auf der Oberseite des Oberteils mindestens drei freibeweglichen Stützen zum Auflegen eines Gerätes unter Schutz gestellt.

In Anspruch 15 wird die Verwendung von mindestens drei Dämpfungseinrichtungen gemäß der Ansprüche 4,8 bis 11 mit einer auf jedem Oberteil im Bereich seines Kreismittelpunktes freibeweglichen Stütze zum Auflegen eines Gerätes unter Schutz gestellt. Erfindungsgemäß ist in diesem Fall auch bei nicht glatter Aufstellfläche der Dämpfungseinrichtungen eine eindeutige Bedämpfung von Geräten zu erreichen.

Anspruch 16 stellt die Verwendung von Schichten aus Dämmmaterial gleicher und / oder verschiedener Oberflächenkontur, gleicher und / oder verschiedener Materialquerschnitte, gleicher und / oder verschiedener Shorehärte für den Dämpfer unter Schutz. Somit können Oberflächenkombinationen von aneinander anschließenden kompressiblen Schichten oder nichtkompressiblen Schichten miteinander eingesetzt werden, bei welchen eine glatte Oberfläche einer strukturierten Oberfläche, oder glatte Oberflächen einander gegenüberstehen, oder strukturierte Oberflächen einander gegenüberstehen. Auch ist der Materialquerschnitt kompressibler Schichten frei wählbar, so daß Lochungen im Dämmmaterial in vertikaler Richtung zur Aufstellfläche ohne weiteres erfindungsgemäß eingesetzt werden können, unabhängig ob die durchgehenden Öffnungen hierbei als Zylinderquerschnitte oder konische Querschnitte ausgebildet sind, insbesondere dann, wenn die konischen Querschnitte ihren Ursprung in Richtung auf das Oberteil oder in Richtung auf dem Geräteboden von der Dämpfungseinrichtung aus gesehen besitzen.

Die oben als erfindungsgemäß beschriebenen elastischen Kunststoffe und Elastomere mit ihren spezifischen Eigenschaften, dem sämisch gegerbten Leder in Kombination mit Blei und Eisen in einer besonders angeordneten Sandwichstruktur ergibt überraschenderweise zufolge erfindungsgemäßer Mehrfachdämpfung, der erstmaligen Einfügung eines ferromagnetischen Werkstoffes und der erstmaligen Verwendung von sämisch gegerbtem Elchleder eine außergewöhnliche Klangqualität bei einer Musikwiedergabe wie auch Bildwiedergabe.

Der Innenraum der erfindungsgemäßen Dämpfungseinrichtung besteht aus einem Materialmix in Sandwichstruktur aus verschiedenen Schichten. Die in den Schichten unterschiedlich angeordneten, sehr leichten Elastomere (Polymere) haben unterschiedliche spezifische Gewichte und Härtegrade, sowie unterschiedliche Oberflächenstrukturen. Die innere Struktur der Elastomere ist ein geschlossenzelliges Material. Durch die Flexibilität und Standfestigkeit ist die Formstabilität gewährleistet. In Kombination mit mehreren Dichten (Härten) in Verbindung mit sämisch gegerbtem Leder und beidseitig verzinktem Eisen und einseitig verzinktem Blei in einer bestimmten Anordnung untereinander wird eine Sandwichstruktur gebildet, die erfindungsgemäß mechanische Resonanzen und Vibrationen praktisch völlig dämpft und absorbiert.

Da die Eigenresonanzen der Dämpfungsmaterialien einen großen Frequenzbereich umfassen, ist es wichtig, zur Ausschaltung dieser Resonanzen ein Materialmix mit einer gegen null gehenden Eigenfrequenz in Sandwichstruktur zu verwenden, wobei diese selbst auch eine praktisch gegen null gehende Eigenresonanz aufweist. Es läßt sich also feststellen, daß in einfachster Form die erfindungsgemäße Kombination aus einem Eisenpfad und gegerbtem Leder in Verbindung mit einem Gehäuse bereits die der Erfindung zugrunde liegende Aufgabe die sich sowohl auf in analoger und/oder digitaler Form vorliegende Informationssignale erstreckt, löst.

Das erfindungsgemäße Verfahren, die erfindungsgemäßen Dämpfungseinrichtungen und das erfindungsgemäße Audiogerät dienen zur Lösung der der Erfindung zugrunde liegenden Aufgabe unabhängig davon ob Informationssignale in analoger oder digitaler Form vorliegen, welche von Störspannungen beeinflußt werden. Auch ist das erfinderische Verfahren und die erfinderischen Dämpfungseinrichtungen sehr wohl bei Heimkinoanlagen also ganz allgemein auf dem Multimedia-Gebiet und bei DVD-Playern einsetzbar.

In der nachfolgenden Beschreibung werden nach der Erfindung hergestellte Dämpfungseinrichtungsbeispiele näher beschrieben, wobei gleiche Bauteile mit denselben Bezugsziffern bezeichnet werden.

In der Zeichnung werden als Beispiele bevorzugte Ausgestaltungen des Erfindungsgegenstandes dargestellt.

Es zeigen:

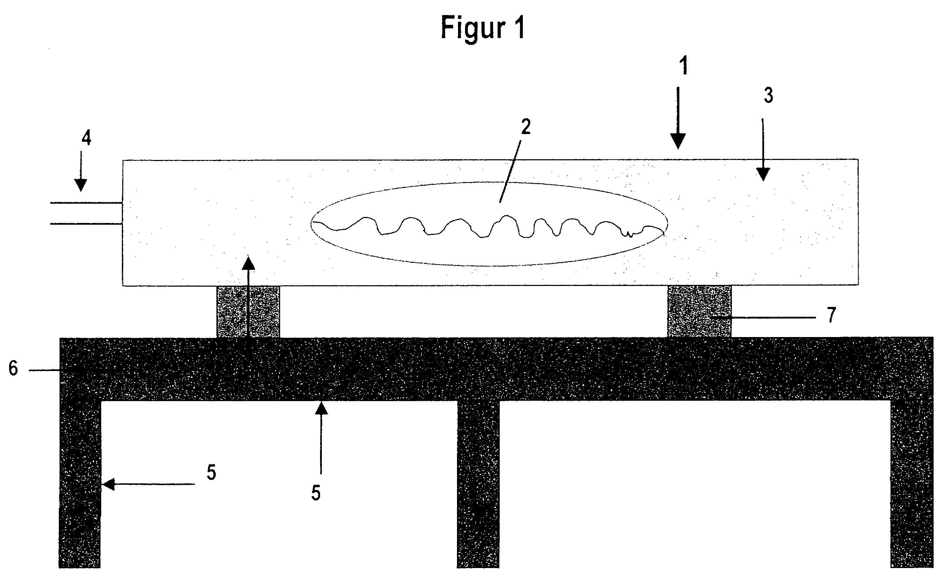

- Figur 1: wesentliche in und an einem Wiedergabegerät auftretende Störschwingungen und mechanische Resonanzen, welche die Informationssignale beeinflussen,
- Figur 2: Darstellung der Wirkungsweise einer nach dem erfinderischen Verfahren ausgebildeten Dämpfungsbase,
- Figur 3: eine gehäuseförmige Dämpfungsbase mit einem erfindungsgemäßen Dämpfer im Schnitt,
- Figur 4: eine zylindrische Dämpfungsbase mit einem erfindungsgemäßen Dämpfer im Schnitt und
- Figur 5: ein Audiogerät mit integrierter Dämpfungsbase im Schnitt

In der nachfolgenden Beschreibung werden gleiche Bauteile mit denselben Bezugsziffern bezeichnet.

Einem Wiedergabegerät 1 werden nicht nur Informationssignale in Form elektrischer Schwingungen 2 zur Verarbeitung und / oder Wiedergabe in Ton und / oder Bild zugeführt, sondern es entstehen in den Geräten selbst auch Störschwingungen, ferner werden Schwingungen zugeführt, die als Schallwellen 3 direkt auf das Wiedergabegerät 1 einwirken, bzw. Störwellen 4, die über die elektrische Versorgung in das Wiedergabegerät 1 oder in, in diesem angeordnete Bauteile, wie Platinen, gelangen, und Körperschallwellen 5, welche beispielsweise ausgehend von einem Körperschall über Gestelle 6 und Abstützungen 7 auf das Wiedergabegerät 1 einwirken. Hierdurch entstehen mechanische Resonanzen im / oder am Wiedergabegerät 1, welche die Wiedergabe der Informationssignale durch Interferenzen beeinträchtigen. Ebenso müssen durch die Störschwingungen ausgelöste Bewegungen des Wiedergabegerätes 1 beseitigt werden, da nicht auszuschließen ist, daß diese Sekundärschwingungen wiederum Resonanzen in den Gerätegehäusen auslösen können, die die Informationssignale im Wiedergabegerät beeinträchtigen.

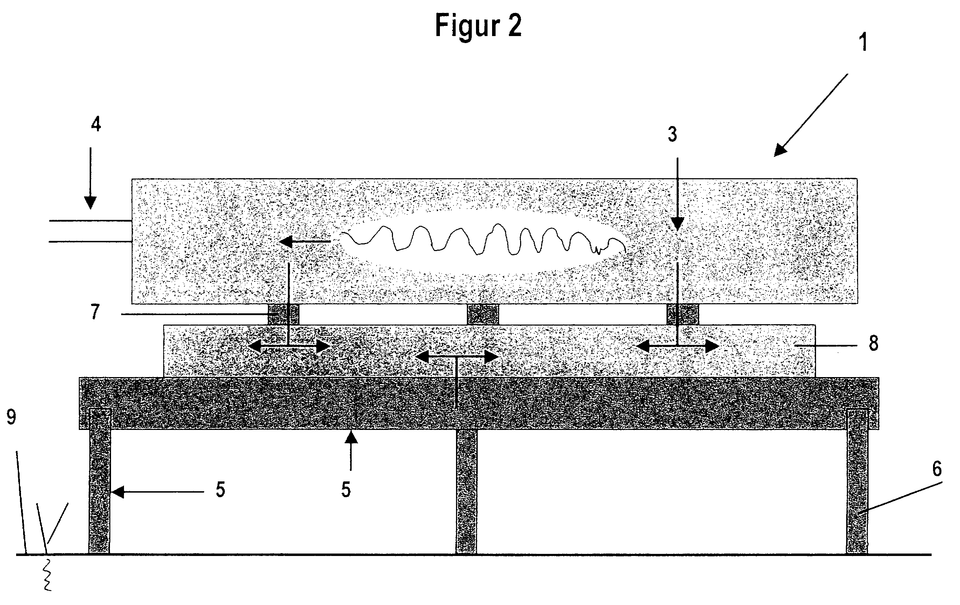

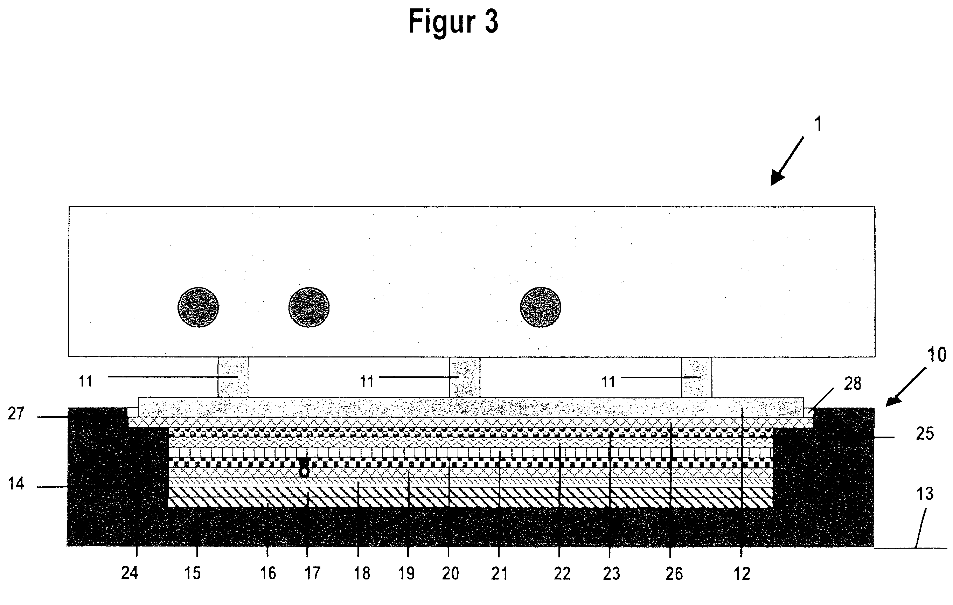

Durch eine erfindungsgemäße Mehrfachdämpfung werden, wie in Figur 2 dargestellt, im Dämpfer 8 die aus Schallwellen , Störwellen, Körperschallwellen und Trittschallwellen entstehenden Resonanzen vernichtet. Das Wiedergabegerät 1 bedarf insoweit keines Gestells 6, sondern kann direkt auf einem Flur 9 unter Zwischenschaltung des Dämpfers 8 aufgestellt werden. Auch hierbei werden vom Flur übertragene Schwingungen, welche in Resonanz zum Wiedergabegerät treten können, und welche gegebenenfalls ein Ausschwingen des Wiedergabegerätes 1 verursachen könnten, durch die Mehrfachdämpfung im Dämpfer 8 beseitigt. Gemäß Figur 3 steht eine gehäuseförmige Dämpfungsbase 10 auf einem nicht näher bezeichneten Untergrund 13, bei dem es sich um ein Gestell 6 oder einen Flur 9 handelt, und trägt über auf einem Oberteil 12 der gehäuseförmigen Dämpfungsbase 10 frei verschiebbaren Stützen 11 das Wiedergabegerät 1. Bei dem Wiedergabegerät 1 kann es sich um ein Audio-, Videogerät, Verstärker, Lautsprecher oder dergleichen handeln.

Wie in Figur 3 ausgeführt, werden mechanische Resonanzen und störende Schwingungsenergien über das Fundament 13 einem Unterteil 14 der gehäuseförmigen Dämpfungsbase 10 zugeleitet, und dem in einer Vertiefung 15 des Unterteils 14 angeordneten Dämpfer 8 zugeführt. Der Dämpfer 8 besteht aus einer ersten Elastomereschicht mit einer Härte von 68 Shore und einer Dicke von 1,1 mm, welche glatte Oberflächen besitzt. Eine zweite Elastomereschicht 17 besitzt ebenfalls eine Härte von 68 Shore, ebenfalls eine Dicke von 1,1 mm im unbelasteten Zustand, also ohne Flächenpressung, und ist an ihren Oberflächen glatt oder zufolge des Materialquerschnitts perforiert. Anschließend folgt eine dritte Elastomereschicht 18 mit einer Härte von 22 Shore und einer Schichtdicke von 3 mm im unbelasteten Zustand, wobei die der zweiten Schicht gegenüberliegende Oberfläche glatt, die andere Oberfläche strukturiert ist. Hierauf folgt eine erste Lederschicht 19 mit einer Dicke von ca. 4 mm, deren Fleischseite mit der strukturierten Oberfläche der dritten Elastomereschicht 18 zusammenwirkt, und deren Haarseite in Richtung einer Bleiplusschicht 20 weist, die mit ihrer verzinkten Seite auf der Haarseite der Lederschicht 19 aufliegt. Bei der ersten Lederschicht wurde sämisch gegerbtes Leder, vorzugsweise Elchleder, verwendet.

Die Bleiplusplatte 20 von 2 mm Dicke besitzt eine verzinkte Oberseite, auf der sich eine Elastomereschicht 21 mit einer Härte von 22 Shore und einer Dicke von 3 mm in unbelastetem Zustand abstützt, welche zufolge die Materialschicht durchsetzende konische Öffnungen perforiert ist, deren Fußkreise auf der verzinkten Oberfläche des Bleis aufstehen. Die Elastomereschicht 21 trägt eine weitere Elastomereschicht 22 mit einer Härte von 25 Shore und einer Dicke von 3 mm im unverdichteten Zustand, die sich mit ihrer glatten Seite auf der Elastomereschicht 21 abstützt, während die obere, strukturierte Oberfläche mit einer beidseitig verzinkten Eisenplatte 23 von 2 mm Dicke zusammenwirkt.

Die beidseitig verzinkte Eisenplatte 23 wird mit einer Auflage 24 im Unterteil 14 ausgerichtet und anschließend an der Innenwand 25 der Vertiefung 15 punktuell festgeklebt, und dabei die Klebung so durchgeführt, daß keine Schwingungen an dieser Stelle auf das Unterteil weitergegeben werden können. Auf der Oberseite der galvanisch verzinkten Eisenplatte 23 und auf der Auflage 24 liegt eine weitere Lederschicht 26, welche sich bis zum Rand 27 der Auflage 24 erstreckt. Die weitere Lederschicht hat eine Dicke von ca. 5 mm, deren Fleischseite in Richtung der galvanisch verzinkten Eisenplatte 23 zeigt, und deren Haarseite in Richtung des Oberteils 12 weist.

Die weitere Lederschicht 26, welche aus sämisch gegerbtem Leder besteht, wird ohne Vorpressung aufgelegt, flächig mit der Auflage 24 verklebt und steht lediglich unter der Gewichtsbelastung des Wiedergabegerätes 1, welches sich über das Oberteil 12 auf der zweiten Lederschicht 26 abstützt.

Im Ausführungsbeispiel gemäß Figur 3 wird ausführlich dargestellt, daß das Oberteil 12 nur mit seinem die Vertiefung 15 des Unterteils 14 überragenden Bereich mit der weiteren Lederschicht 26 verbunden ist. Somit wird der Bereich der weiteren Lederschicht 26, welcher über der galvanisch verzinkten Eisenplatte 23 vorhanden ist, frei beweglich bleiben und zwar in Richtung auf das Oberteil 12 und in Richtung auf die Eisenplatte 23. Eventuell auftretende Kräfte, bspw. Scherkräfte können hierbei weder die Oberfläche der Eisenplatte noch die dem Elchleder zugewandte Oberfläche des Oberteils 12 beeinflussen; Sekundärschwingungen werden also hier völlig ausgeschaltet. Spalt 28 zwischen der Außenkante des Oberteils 12 und dem Rand 27 der Auflage wird ebenfalls vom Elchleder völlig überdeckt. Die in diesem Bereich in das Elchleder eintretenden Sekundärschwingungen werden zufolge der unbeeinflussten Dämmmöglichkeit im Querschnitt des Elchleders aufgrund seiner freien Oberfläche völlig ausgelöscht.

Das Oberteil 12 ist bevorzugt aus einer geschliffenen Aluminiumplatte von 6 mm Dicke hergestellt.

Die verschiebbaren Stützen 11 tragen das Wiedergabegerät 1 an seiner Unterseite. Dabei sind die verschiebbaren Stützen in ihrer Höhe so ausgewählt, daß eventuell am Wiedergabegerät vorhandene Stützbeine nicht auf dem Oberteil 12 aufstehen.

Das Unterteil 14 der Dämpfungsbase besteht aus Multiplex Birkenholz und der Dämpfer 8 stützt sich mit seiner ersten und zweiten Elastomereschicht 16 und 17, welche die größte Härte der Elastomere im gesamten Dämpfer besitzen, auf dem Boden der Vertiefung 15 ab.

Durch die gehäuseförmige Dämpfungsbase 12 wird zufolge der über die galvanisch verzinkte Eisenplatte aufgebrachte Pressdruck in Verbindung mit dem zwischen Aluminiumplatte 12 und Rand 27 der Auflage 24 vorhandenen Spalt 28 und dem Einsatz der weiteren Lederschicht 26 zunächst eine Dämpfung der vom Wiedergabegerät kommenden Störschwingungen bewirkt, zum anderen werden die aus dem Fundamentbereich herangeführten Störschwingungen bzw. hieraus entstehenden Resonanzen in das Unterteil geführt, können jedoch wegen des absorbierenden Schichtaufbaus des Dämpfers 8 und der darauf liegenden, stark dämpfenden, sämisch gegerbten Lederschicht 26 nicht störend in das Aluminiumoberteil 12 eindringen und somit auch nicht über die verschiebbaren Stützen 11 in das Wiedergabegerät 1 eindringen. Durch die vorgebbare Flächenpressung über die galvanisch verzinkte Eisenplatte 23 werden alle Teilschichten des Dämpfers 8, die aus Elastomeren bestehen, an die Innenwand 25 der Vertiefung 15 angepresst.

In der Umgebung stromführender Leitungen entstehen magnetische Felder. Sie können in anderen elektrischen Leitungen oder in Bauteilen von Systemen elektrische Spannungen induzieren. Diese Störspannungen beeinflussen die Spannungen der analogen und/oder digitalen Informationssignale. Die analogen und/oder digitalen Informationssignale entsprechen nicht mehr ihrer ursprünglichen Form. Ferromagnetische Werkstoffe leiten magnetische Feldlinien sehr gut. Stellt man dem magnetischen Feld einen sogenannten "Eisenweg" zur Verfügung, so breiten sich die Feldlinien über diesen Eisenweg aus. Durch die ferromagnetische Eisenplatte 23 werden die magnetischen Feldlinien angezogen, wobei eine Verdünnung dieser Feldlinien um die elektrischen Leiter und Bauteile im Wiedergabegerät eintritt. Diese Verdünnung der magnetischen Feldlinien bedeutet somit eine Abnahme der induzierten Spannungen und damit eine Abnahme der Störspannungen in Leitern und Bauteilen des Wiedergabegerätes, in denen die Informationssignale verarbeitet werden. Die ursprüngliche Form der Signale bleibt somit praktisch erhalten. Jedoch werden erfindungsgemäß nicht nur wie oben ausgeführt analog vorliegende verfälschte Informationssignale sondern insbesondere digital vorliegende durch Störspannungen verfälschte Informationssignale mit Hilfe des vorliegenden erfinderischen Verfahrens und mit Hilfe der erfinderischen Dämpfungseinrichtungen so bedämpft , daß hervorgerufene Resonanzen und Vibrationen praktisch völlig bedämpft und absorbiert werden.

Durch die Erfindung wird also erstmals ein Weg aufgezeigt wie sowohl analog als auch digital vorliegende Informationssignale von Störspannungen letztlich völlig befreibar sind.

Unter der Bezeichnung Wiedergabegerät werden Kompakt-CD-Spieler, CD-Laufwerke, CD-Wandler, Plattenspieler, Verstärker, Lautsprecher, DVD-Player, Heimkinoanlagen, Videogeräte, sogenannte Stromaufbereiter welche die Störungen im Sinusverlauf des Stroms in öffentlichen Netzen minimieren oder dergleichen verstanden.

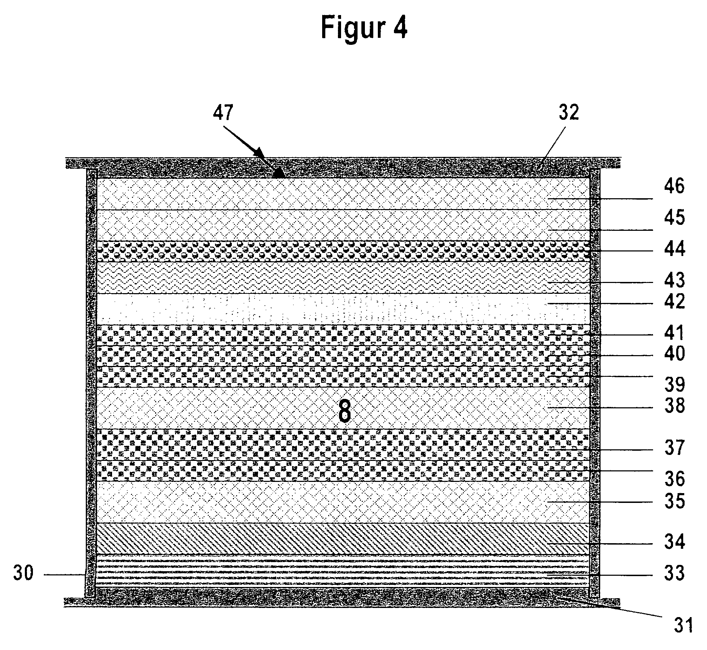

Die in Figur 4 dargestellte zylindrische Dämpfungsbase besitzt einen Aluminiumhohlzylinder 30, einen mit einem Bund versehenen Aluminiumdeckel 31 als Bodenteil und ein mit einem Bund versehenes Oberteil 32. Auf dem Aluminiumdeckel 31 stützt sich eine erste Elastomererundscheibe 33 mit einer Härte von 40 Shore, einer Dicke von 3 mm in unbelastetem Zustand und einer beidseitig glatten Oberfläche ab. Diese erste Elastomererundscheibe 33 besitzt bei diesem Dämpfer ebenfalls die höchste Shorehärte von 40, darauf folgt eine zweite Elastomererundscheibe 34 mit einer Dicke von 3 mm im unbelasteten Zustand und einer Härte von 22 Shore, deren glatte Oberfläche auf der glatten Oberfläche der Elastomererundscheibe 33 aufliegt, und deren andere Oberfläche strukturiert ist. Anschließend folgt eine erste Lederrundscheibe 35 mit einer Dicke von ca. 4 mm im unbelasteten Zustand. Hierauf folgt eine Bleiplusrundscheibe 36, welche einseitig verzinkt ist, und deren verzinkte Seite in Richtung der ersten sämisch gegerbten Lederrundscheibe 35 zeigt. Die Dicke der Bleiplusscheibe beträgt 1 mm. Anschließend folgt eine zweite Bleiplusscheibe 37, einseitig verzinkt, 2 mm Dicke, deren verzinkte Seite zu einer zweiten Lederrundscheibe 38 von ca. 4 mm Dicke zeigt und die mit der Fleischseite der sämisch gegerbten Lederschicht zusammenwirkt. Die Haarseite der sämisch gegerbten Lederschicht 38 wirkt mit der verzinkten Seite einer dritten, einseitig verzinkten Bleiplusschicht 39 von 1 mm Dicke zusammen. Hierauf folgt eine vierte, einseitig verzinkte Bleiplusscheibe 40 von 2 mm Dicke, welche anschließend an die unverzinkte Seite der dritten Bleiplusrundscheibe 39 anschließt. Die fünfte Bleiplusrundscheibe 41 mit einer Dicke von 2 mm liegt mit ihrer unverzinkten Seite auf der vierten

Bleiplusrundscheibe 40 auf und zeigt mit ihrer verzinkten Oberfläche zu einer dritten Elastomerescheibe 42 mit einer Härte von 22 Shore und 3 mm unverdichteter Dicke. Die dritte Elastomerescheibe 42 ist kegelförmig in ihrem Materialquerschnitt perforiert, die Grundkreise stehen auf der verzinkten Seite der Bleiplusscheibe auf. Anschließend folgt eine vierte Elastomerescheibe 43 mit einer Härte von 25 Shore und einer unverdichteten Dicke von 3 mm, deren glatte Seite auf der dritten Elastomerescheibe 42 aufliegt. Die vierte Elastomerescheibe 43 trägt auf der strukturierten Seite eine beidseitig galvanisch verzinkte Eisenrundscheibe 44 mit einer Dicke von 2 mm. Daran schließt sich eine dritte, sämisch gegerbte Lederrundscheibe 45 von ca. 4 mm Dicke an, deren Haarseite mit der Oberseite der beidseitig verzinkten Eisenrundscheibe 44 zusammenwirkt, und deren Fleischseite mit der Fleischseite einer vierten Lederrundscheibe 46 von ca. 4 mm Dicke zusammenwirkt. Die Haarseite der vierten Lederrundscheibe 46, welche ebenfalls aus sämisch gegerbtem Elchleder ist, liegt an dem Aluminiumoberteil mit Bund 32 an. Da die Dicke der vierten Lederrundscheibe 46 jedoch auch variabel gestaltet werden kann, läßt sich mit dem Oberteil mit Bund 32 eine einstellbare Flächenpressung auf den Dämpfer 8 ohne weiteres ausüben.

Zur Abstützung eines Wiedergabegerätes 1 werden mindestens drei der in Figur 4 beschriebenen zylindrischen Dämpferbase verwendet unter Aufsetzen je einer verschiebbaren Stütze 11 auf dem Oberteil mit Bund 32. Eine derartige nach der Erfindung ausgestaltete zylindrische Dämpfungsbase ist mit weiteren zylindrischen Dämpferbasen und dem Einsatz von verschiebbaren Stützen 11 besonders für große Grundflächen abzustützende Wiedergabegeräte 1 geeignet oder für Wiedergabegeräte, deren Grundflächen von einem Rechteck abweichen, und zwar in Richtung auf ovale oder runde oder vieleckige Grundflächen.

Durch eine einstellbare Flächenpressung, ausgehend von einer durch Eigengewicht hervorgerufenen bis zu einer vorgebbaren vorsätzlichen Flächenpressung durch Auswahl der Dicke mindestens einer der Scheiben insbesondere der Lederscheibe 46 ist wie zu Figur 3 beschrieben in derselben Weise eine gegen null gehende Dämpfung der Resonanzen und auch das Vermeiden von Sekundärschwingungen, welche die analogen und die digitalen Informationssignale beeinträchtigen, gegeben.

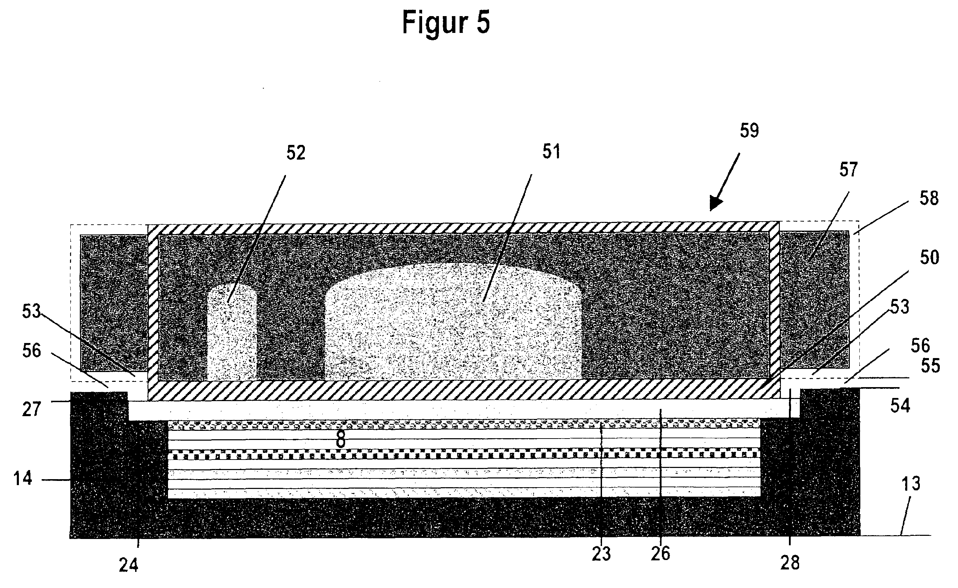

Das in Figur 5 dargestellte Audiogerät mit integrierter Dämpfungsbase im Schnitt eignet sich insbesondere für auf diesen Dämpfungsbasen auf dem Fundament 13 direkt abzustellende Tonmöbel. Hierbei ist das Unterteil der integrierten Dämpfungsbase bevorzugt in Holz so ausgebildet wie das Unterteil 14 einschließlich Dämpfer 8 gemäß Figur 3. Lediglich anstelle des Oberteils 12 tritt nunmehr ein Gerätebodenteil 50, welches sich direkt auf der weiteren Schicht 26 aus sämisch gegerbtem Elchleder gemäß Figur 3 abstützt. Auch für das Gerätebodenteil 50 gemäß Figur 5, welches im Ausführungsbeispiel schematisch als ein Verstärker abgebildet ist, welcher elektronische Bauelemente 51 und 52 trägt, muß Sorge dafür getroffen sein, daß das Gerätebodenteil 50 einen Spalt zum Rand 27 der Auflage 24 des Unterteils 14 gemäß Figur 3 besitzt, und daß bei einem großen Gerätebodenteil 53 zwischen Oberkante 54 des Unterteils 14 und Unterkante 55 des großen Gerätebodenteils 53 ebenfalls ein Abstand 56 besteht, und zwar zwischen einer gestrichelt dargestellten Vergrößerung 57, 58 eines Verstärkers 59. Anstelle des Verstärkers 59 kann jedes andere elektronische Wiedergabegerät, wie Audio- und Videogeräte, Lautsprecher oder dergleichen über sein Bodenteil direkt mit einer Dämpfungsbase gemäß Figur 3 jedoch ohne Aluminiumoberteil 12 erfindungsgemäß integriert verbunden sein.

Als eine erfindungsgemäße Ausgestaltung wird es angesehen, wenn zwischen der weiteren Schicht 26 aus sämisch gegerbten Elchleder und dem Geräteboden 50 ein Klettverschluß vorgesehen ist. Hiermit wird es erstmals möglich, die erfindungsgemäße Dämpfungsbase mit beliebigen Wiedergabegeräten zu integrieren.

Es fällt ferner unter den Schutzumfang der vorliegenden Erfindung, wenn der Dämpfer 8 mit Sockel 14, Rand 27 und weiterer Schicht 26 als tragender Zwischenboden, als Seitenwand oder Abdeckung bei Lautsprechereinheiten bspw. bestehend aus Tief-/ Mittel-/ und Hochtönern integriert wird, also ein komplettes Wiedergabegerät darstellt.

Gleichermaßen fällt unter den Schutzumfang der vorliegenden Erfindung die Ausgestaltung anderer Audio- und Videogeräte, Verstärker, Stromverbesserer, Fernsehgeräte und dergleichen mit der erfindungsgemäßen integrierten Dämpfungsbase, wie in Figur 5 beschrieben. Also alle im Multimedia-Bereich verwendeten Medientypen für Texte, Bilder, Graphiken, Tonsequenzen, Animationen, Videoclips in einem System, in dem diese Informationen gespeichert, präsentiert und manipuliert werden können.

Wie bereits ausgeführt, fällt es unter den Schutzumfang der vorliegenden Erfindung, wenn die im Dämpfer 8 teilweise unter einer wie oben näher definierten Flächenpressung stehenden Dämpferbestandteile lediglich aufeinander aufliegen oder miteinander verklebt sind.

## Patentansprüche

1. Verfahren zur Beeinflussung von in Schwingungsform vorliegende Informationssignale beeinträchtigende Störfaktoren, sowie Dämpfung, Ableitung und Umwandlung von mechanischen Resonanzen und störenden Schwingungsenergien bei Audio- und Videogeräten, Lautsprechern oder dergleichen dadurch gekennzeichnet, daß entstehende Resonanzen und / oder störende Schwingungsenergien einer Mehrfachdämpfung unterworfen werden, Schwingungsenergien in Wärme umgewandelt werden, und daß die bei Mehrfachdämpfung und / oder Wärmeumwandlung entstehenden Sekundärschwingungen durch die Mehrfachdämpfung ausgelöscht werden.

2. Dämpfungseinrichtung bestehend aus einem rechteckigen Gehäuse mit einem Oberteil (12) und einem Unterteil (14), wobei Ober - und Unterteil miteinander verbunden sind und zwischen Ober - und Unterteil angeordneten Schichten zur Absorption von Resonanzen und störender Schwingungsenergien und ihre Umwandlung in Wärmeenergie bei Audio-, Videogeräten, Lautsprechern oder dergleichen zur Durchführung des Verfahrens nach Anspruch 1 dadurch gekennzeichnet, daß das Oberteil (12) auf dem Unterteil (14) dergestalt aufliegt, daß mindestens ein Teil eines Dämpfers (8) bestehend aus übereinander angeordneten Schichten aus Dämmmaterial, in von einer Auflage (24) begrenzten Vertiefung (15) im Unterteil (14) angeordnet ist, daß dieser Teil einer durch sein Eigengewicht hervorgerufenen Flächenpressung ausgesetzt ist, daß das Oberteil (12) sich über mindestens eine weitere, aus Dämmmaterial bestehende, Schicht (26) des Dämpfers (8) auf der Auflage (24) im Unterteil (14) und gleichzeitig über die weitere Schicht (26) auf der obersten Schicht (23) aus Dämmmaterial des in der Vertiefung (15) angeordneten Teils des Dämpfers (8) abstützt und daß Auflage (24) und oberste Schicht (23) zueinander ausgerichtet sind und eine Ebene bilden.

3. Dämpfungeinrichtung nach Anspruch 2 dadurch gekennzeichnet, daß die Unterseite der weiteren Schicht (26) aus Dämmmaterial mit der Auflage (24) des Untereils (14) verklebt ist und mit ihrer Oberseite lediglich mit dem Teil der Unterseite des Oberteils (12) verklebt ist, der die Vertiefung (15) des Unterteils (14) überragt, und daß ein Spalt (28) zwischen Rand (27) der Auflage (24) im Unterteil (14) und dem Aussenrand des Oberteils (12) vorgesehen ist.

4. Dämpfungseinrichtung bestehend aus einem Gehäuse mit einem Oberteil und einem Unterteil, wobei Ober- und Unterteil miteinander verbunden sind, und zwischen Ober- und Unterteil angeordneten Schichten zur Absorption von Resonanzen und störender Schwingungsenergien und ihre Umwandlung in Wärmeenergie bei Audio-, Videogeräten, Lautsprechern oder dergleichen zur Durchführung des Verfahrens nach Anspruch 1 dadurch gekennzeichnet, daß in einem aus einem Aluminiumhohlzylinder (30) vorgegebenen Innendurchmessers, vorgegebener Wanddicke und Höhe, und einem mit diesem Hohlzylinder verbundenen Aluminiumdeckel (31), welcher insbesondere mit einem Bund (32) auf dem Rand des Hohlzylinders (30) aufsitzt und verklebt ist, als Aufstandsfläche, bestehenden Unterteil, Schichten aus Dämmmaterial als Dämpfer (8) angeordnet sind, daß ein das Oberteil bildender Deckel aus Aluminium vorgegebener Dicke, welcher mit einem Bund (32) auf dem Rand des Hohlzylinders (30) aufsitzt, an seiner mit den Schichten aus Dämmmaterial zusammenwirkenden Oberfläche einen Absatz variablen Höhe und einem dem lichten Durchmesser des Hohlzylinder entsprechenden Durchmesser besitzt, welcher sich in den Hohlzylinder (30) hinein erstreckt, und daß der Deckel an seinem Bund mit dem Rand des Hohlzylinders unter Ausübung eines Flächendrucks hervorgerufen durch sein Eigengewicht auf die Schichten aus Dämmmaterial verklebt ist.

5. Audiogerät zur Durchführung des Verfahrens nach Anspruch 1 dadurch gekennzeichnet, daß der Audiogeräteboden (50) mit seiner Aufstandsfläche direkt auf mindestens einer Schicht aus sämisch gegerbten Elchleder als weiterer Schicht (26) eines Dämpfers (8) aufliegt, daß die Lederschicht (26) in horizontaler Richtung die Aufstandsfläche des Audiogerätebodens überragt, daß die Lederschicht (26) auf einer mindestens einseitig galvanisch mit Zink überzogenen ferromagnetischen Schicht, als oberster Schicht eines in einer Vertiefung (15) eines Unterteils (14) angeordneten Teils des Dämpfers (8) und auf einer in derselben Ebene verlaufenden Auflage (24) im Unterteil (14) aufliegt, daß die galvanisch mit Zink überzogene ferromagnetische Schicht mit ihrer Oberseite mit der Auflage (24) im Unterteil (14) ausgerichtet ist, daß in der Vertiefung (15) ein durch die ferromagnetische Schicht unter Flächenpressung stehender Teil des Dämpfers (8) sich bis zum Innenboden der Aufstandsfläche des Unterteils (14) erstreckt, daß das Unterteil (14) die Lederschicht (26) in vertikaler Richtung überragt, daß zwischen der Oberseite (54) des Unterteils (14) und der Unterseite (55) der großen Aufstandsfläche (53) des Audiogerätebodens (50) ein umlaufender Spalt (56) vorgesehen ist und daß zwischen der seitlichen Audiogerätebodenbegrenzung und einem Rand (27) der Auflage (24) im Unterteil (14) ebenfalls ein umlaufender Spalt (28) vorgesehen ist.

6. Audiogerät nach Anspruch 5 dadurch gekennzeichnet, daß die Unterseite der Schicht (26) aus sämisch gegerbten Elchleder mit einer Auflage (24) des Unterteils (14) verklebt ist und mit ihrer Oberseite lediglich mit dem Teil des Gerätebodens (50) verklebt ist, der die Vertiefung (15) des Unterteils (14) überragt, und daß ein Spalt (28) zwischen Rand (27) des Unterteils (14) und dem Geräteboden (50) vorgesehen ist.

7. Dämpfungseinrichtung nach Anspruch 2,3 oder 4 oder 5,6 dadurch gekennzeichnet, daß die Stärke der Flächenpressung einstellbar ist.

8. Dämpfungseinrichtung nach Anspruch 2,3 oder Anspruch 4 oder Anspruch 5,6 und Anspruch 7 dadurch gekennzeichnet, daß kompressible und nichtkompressible Schichten aus Dämmmaterial im Dämpfer (8) vorgesehen sind, daß die Dicke je Schicht aus kompressiblem Dämmmaterial ohne Flächenpressung einen Dickebereich von 0,5 mm bis 10,0 mm je einschließlich umfassen, und daß die Dicke je Schicht aus praktisch nichtkompressiblem Material einen Dickebereich von 0,5 mm bis 12,0 mm je einschließlich umfassen.

9. Dämpfungseinrichtung nach Anspruch 8 dadurch gekennzeichnet, daß Elastomere und Leder kompressibles Dämmmaterial und mindestens eine Bleiplatte vorzugsweise eine mindestens einseitig galvanisch überzogene Bleiplatte, insbesondere Bleiplusplatte, und mindestens eine ferromagnetische Platte, vorzugsweise eine mindestens einseitig galvanisch überzogene ferromagnetische Platte nichtkompressibles Dämmmaterial sind, und daß mindestens eine Schicht kompressibler Dämmmaterialien mit mindestens einer Schicht nichtkompressibler Dämmmaterialien abwechselt, und daß im Dämpfer (8) mindestens eine mindestens einseitig galvanisch überzogene Bleiplusplatte und mindestens eine galvanisch beidseitig überzogene ferromagnetische Platte vorgesehen sind.

10. Dämpfungseinrichtung nach einem oder mehreren der Ansprüche 2,3,7,8,9 oder 4,8,9 oder 5,6,7,8,9 dadurch gekennzeichnet, daß als oberste Schicht im Dämpfer mindestens eine Lederschicht, insbesondere sämisch gegerbtes Elchleder, direkt unterhalb des Oberteils oder des Gerätebodens und dieses / diesen seitlich überragend vorgesehen ist, daß die im Dämpfer enthaltene mindestens eine beidseitig galvanisch mit Zink überzogene ferromagnetische Platte in Richtung auf das Oberteil oder auf den Gerätebodenteil mit mindestens der aus sämisch gegerbtem Elchleder bestehenden Schicht bedeckt ist, daß mindestens eine im Dämpfer vorgesehene mindestens einseitig mit Zink überzogene Bleiplusplatte in Richtung auf das Bodenteil von mindestens einer diese seitlich überragende Lederschicht bedeckt ist.

11. Dämpfungseinrichtung nach Anspruch 9 oder 10 dadurch gekennzeichnet, daß eine Schicht aus sämisch gegerbten Elchleder oder eine Rundscheibe aus sämisch gegerbten Elchleder eine kompressible Dämmschicht darstellt.

12. Dämpfungseinrichtung nach einem oder mehreren der Ansprüche 2,3,8 bis 11 oder 4,8 bis 11 oder 5,6 bis 11 dadurch gekennzeichnet, daß die auf der inneren Bodenseite des Unterteils aufliegende erste Schicht kompressiblen Materials die höchste Shorehärte der im Dämpfer verwendeten Elastomere besitzt.

13. Dämpfungseinrichtung nach einem oder mehreren der Ansprüche 2,5,6 bis 12 dadurch gekennzeichnet, daß auf der Außenseite des Oberteils (12) Stützen zur Auflagerung eines Gerätes frei beweglich angeordnet sind.

14. Verwendung einer Dämpfungseinrichtung gemäß der Ansprüche 2,3,7 bis 13 mit auf der Außenseite des Oberteils (12) mindestens drei frei beweglichen Stützen zum Auflegen eines Gerätes.

15. Verwendung von mindestens drei Dämpfungseinrichtungen gemäß der Ansprüche 4,8 bis 11 mit einer auf jedem Oberteil im Bereich seines Kreismittelpunkts frei beweglichen Stütze zum Auflegen eines Gerätes.

16. Verwendung von Schichten aus Dämmmaterial gleicher und / oder verschiedener Oberflächenkontur, gleichen und / oder verschiedenen Materialquerschnitts, gleicher und / oder verschiedener Shorehärte für den Dämpfer.
